# EUROPÄISCHE PATENTSCHRIFT

(11) **EP 3 210 771 B1**
(45) Veröffentlichungstag und Bekanntmachung des Hinweises auf die Patenterteilung: **12.08.2020**
(21) Anmeldenummer: 17000253.9
(22) Anmeldetag: 16.02.2017
(51) Int. Cl.: B32B 5/02, B32B 5/08, B32B 5/22, B32B 5/24, B32B 5/26, B32B 1/00, B32B 1/08, B32B 27/06, B32B 27/16, B32B 27/18, B32B 27/20, B32B 27/26, F16L 55/165

(54) **AUSKLEIDUNGSSCHLAUCH FÜR DIE KANALISIERUNG SOWIE VERFAHREN ZUR HERSTELLUNG EINES SOLCHEN**
CLADDING TUBE FOR CHANNELLING AND METHOD FOR PRODUCING SAME
TUYAU CONDUCTEUR POUR LA CANALISATION ET SON PROCÉDÉ DE FABRICATION

(30) Priorität: 24.02.2016 DE 102016002100
(43) Veröffentlichungstag der Anmeldung: 30.08.2017
(73) Patentinhaber: Brandenburger Liner GmbH & Co. KG, 76829 Landau/Pfalz (DE)
(72) Erfinder: Duttenhöfer, Peter, 76831 Ilbesheim (DE)
(74) Vertreter: Kesselhut, Wolf

(56) Entgegenhaltungen:
- WO-A1-2011/036266
- WO-A1-2016/008914
- WO-A1-2017/059936

## Beschreibung

Die Erfindung betrifft einen Auskleidungsschlauch für die Kanalsanierung sowie ein Verfahren zur Herstellung eines solchen gemäß dem Oberbegriff von Anspruch 1 und 11.

Auf dem Gebiet der grabenlosen Sanierung von defekten Rohrleitungen, wie z.B. defekten Abwasserleitungen oder Abwasserkanälen, werden zunehmend Auskleidungsschläuche eingesetzt, die als "Liner" bezeichnet werden und aus einem gewickelten Glasfasergewebe bestehen, welches mit einem flüssigen Reaktionsharz getränkt ist, das nach dem Einziehen des Auskleidungsschlauchs in die Rohrleitung und Expandieren desselben mit Hilfe von Druckluft durch Licht einer Strahlungsquelle ausgehärtet wird.

Ein solcher, in den zugehörigen Fachkreisen und nachfolgend auch als "Glasliner" bezeichneter Auskleidungsschlauch sowie ein Verfahren zur Herstellung eines solchen sind beispielsweise aus der WO-A 95/04646 bekannt. Ein allgemeiner technischer Hintergrund wird auch in WO 2016/008914 A1 (BKP BEROLINA POLYESTER) vermittelt.

Weiterhin ist es bekannt, Auskleidungsschläuche durch ein Übereinanderlegen von bahnartigem Material aus einem Vlieswerkstoff, z.B. aus Filz, zu fertigen, wobei eine oder mehrere Lagen des Filz- oder Vlieswerkstoffs jeweils überlappend übereinander gelegt oder auf Stoß vernäht werden. Der so gefertigte Auskleidungsschlauch, der nachfolgend auch als Filzliner bezeichnet wird, wird anschließend mit Harz getränkt, welches in einem aufwändigen Verfahren unter Einsatz von Unterdruck in den vergleichsweise dickwandigen Vlieswerkstoff eingebracht wird. Aufgrund des im Vergleich zu Glasfaserwerkstoff günstigen Vlieswerkstoffs und des fehlenden Anteils an Verstärkungsfasern sind die so hergestellten Auskleidungsschläuche zwar günstig in der Herstellung, besitzen aber gegenüber Auskleidungsschläuchen aus Glasfasermaterial eine erheblich geringere Festigkeit.

Eine weitere Unzulänglichkeit der Filzliner ist darin zu sehen, dass diese aus einem vorgefertigten Nadelfilzschlauch mit fester Wandstärke und festem Normdurchmesser - nachfolgend mit "DN " bezeichnet - hergestellt werden. Für jede Wandstärke und jeden Durchmesser muss hierbei jeweils ein eigens angefertigter Nadelfilzschlauch eingesetzt werden.

Ein weiteres Problem stellt es bei Filzlinern in diesem Zusammenhang dar, dass diese bei größeren Durchmessern aufgrund ihres geringen E-Moduls erheblich größere Wandstärken benötigen, um nach dem Aushärten die geforderten Festigkeitswerte zu erreichen. Obgleich die Wandstärke bei Filzlinern mit einem Durchmesser im Bereich von DN 150 mm bis DN 300 mm lediglich nur ca. 4 mm beträgt, wird die Wandstärke bei Filzlinern mit großen Durchmessern von z.B. mehr als 500 mm schnell doppelt so dick wie bei Glaslinern. Da das Filzmaterial zudem für UV-Licht nur eine sehr geringe Durchlässigkeit aufweist, werden Filzliner in der Praxis nicht mit UV-Licht gehärtet sondern mit Hilfe von Heißdampf oder Heißwasser. Hierbei kommen spezielle Reaktionsharze zum Einsatz, die nicht durch UV-Licht, sondern durch Wärme aushärten.

Ein weiterer Nachteil von Filzlinern ist es, dass sie aufgrund der nicht vorhandenen Fasern mit relativ hohem E-Modul und durch den durch die Aushärtereaktion des Harzes bedingten Schrumpf sowohl in ihrer radialen Dimension als auch in der Länge schrumpfen.

Demgemäß ist es eine Aufgabe der vorliegenden Erfindung, einen Auskleidungsschlauch zu schaffen, welcher einerseits im Vergleich zu den zuvor beschriebenen Filzlinern eine erhöhte Festigkeit und geringeren Schrumpf besitzt und welcher andererseits gegenüber einem Auskleidungsschlauch aus Glasfasergewebe deutlich kostengünstiger gefertigt werden kann.

Eine weitere Aufgabe der Erfindung ist es, ein Verfahren zu schaffen, mit welchem sich ein solcher Auskleidungsschlauch im Endlosverfahren fertigen lässt.

Diese Aufgaben werden erfindungsgemäß durch die Merkmale von Anspruch 1 und 11 gelöst.

Weitere Merkmale der Erfindung sind in den Unteransprüchen beschrieben.

Wie die Anmelderin gefunden hat, sind Glasliner mit Durchmessern im Bereich von DN 150 mm - DN 500 mm, insbesondere DN 150 mm - DN 300 mm, mechanisch überdimensioniert, da die geforderte Mindestwandstärke eines solchen Auskleidungsschlauchs generell 4 mm beträgt. Die Werkstoffkennwerte, wie z.B. der Langzeit -E-Modul, liegen aus diesem Grunde über den baulichen Anforderungen, die von den Auftraggebern gefordert werden, um über einen längeren Zeitraum von z.B. 50 Jahren hinweg die notwendige Stabilität eines sanierten Kanals zu gewährleisten.

Wie die Anmelderin weiterhin erkannt hat, sind die Auskleidungsschläuche jedoch in einem bestimmten Durchmesserbereich durch diese Überdimensionierung im Vergleich zu Linern aus günstigeren Werkstoffen, die keine so hohen E-Module besitzen, wie z.B. Auskleidungsschläuche aus Nadelfilz, teurer.

Von der Anmelderin wurde in diesem Zusammenhang ebenfalls erkannt, dass es bei Linern mit Durchmessern im Bereich von DN 150 mm - DN 500 mm und Wandstärken von 3 - 8 mm, vorzugsweise 4 - 6 mm möglich ist, durch den Einsatz einer erfindungsgemäßen Werkstoffkombination aus einem vorzugsweise gewickelten bandförmigen Vlieswerkstoff, der mit einem Glas-Kurzfasern oder Glasmehl enthaltendem Reaktionsharz vorgetränkt ist, oder einem Vlieswerkstoff, der mit reinem Reaktionharz getränkt ist und auf dem eine weitere Lage aus Glasfaserwerkstoff angeordnet ist, welcher ungerichtete Kurzfasern enthält, die Herstellungskosten zu optimieren, ohne hierbei Nachteile bei der Festigkeit und Haltbarkeit in Kauf zu nehmen.

Um sicher zu stellen, dass die Wicklungen des Vlieswerkstoffs beim Einziehen in den Kanal nicht durch die in Längsrichtung wirkenden Zugkräfte auseinander gezogen werden, ist es erfindungsgemäß weiterhin vorgesehen, dass die Vlieslage zumindest um einen Teil ihres Umfangs herum von einem Schutzschlauch umgeben wird, welcher insbesondere eine reißfeste flexible Folie, vorzugsweise ein beschichtetes Polyestergewebe ist, wie es bei LKW-Planen zum Einsatz gelangt.

Hierbei stellt es einen besonderen Vorteil der erfindungsgemäßen Auskleidungsschläuche dar, dass diese in derselben Art und Weise hergestellt und eingebaut werden können, wie die bekannten Glasliner, die beispielsweise nach dem in der zuvor genannten WO-A 95/04646 der Anmelderin beschriebenen Verfahren unter Einsatz einer Wickelzunge gefertigt werden. Anders ausgedrückt ergibt sich bei der erfindungsgemäßen Lösung der Vorteil, dass lediglich die auch als Laminat bezeichnete, auf den Innenfolienschlauch gewickelte erste Lage aus einem anderen Material, nämlich einem Vlieswerkstoff, insbesondere einem bandförmigen Kunstfaservlies, vorzugsweise einem kostengünstigen und für UV-Licht durchlässigen Polyestervlies, gewickelt wird. Die übrigen Verfahrensabläufe für das Aufbringen der zweiten Glasfaserlage aus Wirrfasern sowie der vorzugsweise darum herum angeordneten lichtdichten Verpackung in Form eines flexiblen, für UV-Licht undurchlässigen Außenfolienschlauchs, der bei der ersten alternativen Ausführungsform zwischen der Wirrfaserlage und dem reißfesten Schutzschlauch angeordnet wird, können vom Grundprinzip her in leicht angepasster Form beibehalten werden.

Bei der zuvor beschriebenen Ausführungsform der Erfindung, bei der die Vlieslage mit einem Reaktionsharz getränkt wird, welches vor dem Aufbringen auf die Vlieslage mit Glas-Kurzfasern oder Glasmehl versetzt wird, wird der für UV-Licht undurchlässige Außenfolienschlauch vorzugsweise direkt auf die Außenseite der gewickelten Vlieslage aufgebracht und in bekannter Weise an den Längsrändern thermisch verschweißt, bevor der in dieser Weise geformte Sandwich aus Innenfolienschlauch, darauf angeordneter gewickelter Vlieslage und lichtundurchlässigem Außenfolienschlauch auf der reißfesten flexiblen Folie angeordnet und z.B. mittels Klebeband mit dieser zumindest punktuell verbunden wird.

Bei den zuvor beschriebenen Ausfiihrungsformen der Erfindung wird der Auskleidungsschlauch bevorzugt dadurch erzeugt, dass wenigstens ein, vorzugsweise jedoch mehrere Bänder aus Vlieswerkstoff, welche zuvor einem Glasfasern oder Glasmehl enthaltenem Reaktionsharz getränkt wurden, direkt überlappend auf die Außenseite eines vorzugsweise für UV-Licht durchlässigen Innenfolienschlauchs aufgewickelt werden. Hierzu wird beispielsweise der umfänglich geschlossene und optional auf seiner Außenseite mit einer aufkaschierten Vliesschicht versehene Innenfolienschlauch in bekannter Weise über eine im Durchmesser verstellbare Wickelzunge bewegt, um die herum eine in einer Wickelvorrichtung drehbar gelagerte Rolle mit dem darauf aufgerollten, mit Reaktionsharz getränkten Band aus Vlieswerkstoff auf einer Kreisbahn bewegt wird.

Bei der bevorzugten Ausführungsform der Erfindung hat das Kunstfaservlies, d.h. der bandförmige Vlieswerkstoff, eine Dicke von ca. 1 mm; wobei zur Herstellung eines Liners mit einer Vlieslage, die eine Stärke von z.B. 4 mm besitzt, in diesem Falle vier einzelne Bänder aus Vliesmaterial jeweils mit einem axialen Versatz zwischen den Lagen überlappend übereinander gewickelt werden.

Wie die Anmelderin aufgrund von Versuchen gefunden hat, entspricht die Qualität/Festigkeit des erfindungsgemäßen Auskleidungsschlauchs nach dem Aushärten des Reaktionsharzes in etwa der Qualität/Festigkeit eines in herkömmlicher Weise durch ein Übereinanderlegen von unterschiedlichen Nadelfilzlagen hergestellten Nadelfilzliners, wobei von der Anmelderin überraschender Weise erkannt wurde, dass durch die entweder direkt durch das Reaktionsharz in die Vlieslage eingebrachten Glas-Kurzfasern, bzw. das Glasmehl, das Schrumpfen des Auskleidungsschlauchs nach dem Aushärten erheblich verringert wird. Hierbei ergibt sich gegenüber sonst üblicherweise eingesetzten Glasfaser-Rovings, die sich über die Länge des Auskleidungsschlauchs erstrecken, der Vorteil, dass die Kurzfasern, bzw. das Glasmehl erheblich kostengünstiger als Glasfaser-Rovings sind.

Der erfindungsgemäße Auskleidungsschlauch besitzt den weiteren Vorteil, dass durch das aus dem Stand der Technik bisher noch nicht bekannte Wickeln der ersten Vlieslage auf den Innenfolienschlauch die Herstellung von Auskleidungsschläuchen mit verschiedenen Wandstärken und Durchmessern stets aus dem gleichen bandförmigen Vliesmaterial erfolgen kann, was den logistischen Aufwand - und damit die Kosten _ bei der Fertigung erheblich reduziert. Demgegenüber werden die bisher bekannten Nadelfilzliner jeweils individuell aus einem vorgefertigten Nadelfilzschlauch mit fester Wandstärke und festem Normdurchmesser hergestellt. Für jede Wandstärke und jeden Normdurchmesser muss hierbei jeweils ein eigens angefertigter Nadelfilzschlauch vorgehalten werden.

Durch die erfindungsgemäße Hybridbauweise aus gewickelter Vlieslage und aufgelegter Wirrfasermatte, bzw. die über das Reaktionsharz in die Vlieslage eingebrachten Glas-Kurzfasern wird im ausgehärteten Auskleidungsschlauch das sehr niedrige E-Modul des Vlieswerkstoffs in vorteilhafter Weise mit dem deutlich höheren E-Modul der vergleichsweise kostengünstigen Glas-Kurzfasern im Reaktionsharz, bzw. in der Wirrfasermatte kombiniert, was in überraschender Weise zu einem resultierenden E-Modul führt, welches zumindest so hoch liegt, dass bei einem Auskleidungsschlauch mit einem Norm-Außendurchmesser DN von 150 bis 500 mm eine gesamte Wandstärke von ca. 4 mm in jedem Fall statisch ausreicht, um die üblicher Weise geforderten mechanischen Festigkeitskennwerte zu erreichen.

Bei der bevorzugten Ausführungsform der Erfindung besitzt das wenigstens eine Band aus Vlieswerkstoff der ersten Lage eine Dicke zwischen 0,5 mm und 2 mm, vorzugsweise 1 mm. Die bevorzugte Breite liegt hierbei im Bereich zwischen 200 und 700 mm. Hierbei enthält die erste Lage vorzugsweise wenigstens zwei separate übereinander liegende Bänder aus Vlieswerkstoff. Die erste Lage kann dabei eine Dicke im Bereich zwischen 3 mm und 8 mm, insbesondere zwischen 4 mm und 6 mm besitzen.

Obgleich die Möglichkeit besteht, als Reaktionsharz auch ein von reinen Filzlinern her bekanntes Harz einzusetzen, welches durch Heißdampf oder Heißwasser ausgehärtet wird und hierzu z.B. Peroxide enthält, die bei höheren Temperaturen z.B. oberhalb von 80 °C in Radikale zerfallen, welche die Polymerisation auslösen, kommt bei der zuvor erwähnten ersten Ausführungsform ein Reaktionsharz zum Einsatz welches neben den Glas-Kurzfasern, bzw. dem Glasmehl auch Fotoinitiatoren enthält, so dass dieses durch Licht, insbesondere UV-Licht ausgehärtet werden kann. Wie die Anmelderin in diesem Zusammenhang in überraschender Weise gefunden hat, ist in dem zuvor erwähnten Wandstärkenbereich mit der erfindungsgemäßen Materialpaarung aus Vlieswerkstoff und der darauf aufgebrachten Wirrfasermatte, bzw. den in den Vlieswerkstoff eingebrachten Glas-Kurzfasern, bzw. dem Glasmehl die vollständige Durchhärtung der Vlieslage sowie auch der Glasfaserlage in zuverlässiger Weise möglich, obwohl der eingesetzte Vlieswerkstoff eine gegenüber reinem Glasfasermaterial erheblich geringere Lichtdurchlässigkeit aufweist. Dies eröffnet die Möglichkeit, die erfindungsgemäßen Auskleidungsschläuche in der bisher nur für Auskleidungsschläuche aus Glasfasermaterial bekannten Weise in erheblich kürzerer Zeit und mit einem wesentlich geringeren Aufwand dadurch auszuhärten, dass eine UV-Lichtquelle durch den Innenraum des mit Hilfe von Druckluft aufgestellten Auskleidungsschlauchs hindurchgeführt wird. Eine solche Lichtquelle ist beispielsweise aus der DE 102005 054 970A1 bekannt.

Nach einem weiteren der Erfindung zugrunde liegenden Gedanken ist der Vlieswerkstoff ein Kunststoffvlies, insbesondere ein Polyestervlies und/oder ein Polyethylenvlies und/oder ein Polyacrylnitrilvlies oder enthält zumindest ein solches. Hierbei ist der Einsatz eines Gemisches aus den zuvor genannten Vlieswerkstoffen ebenfalls denkbar. In gleicher Weise kann der Vlieswerkstoff bereits bei der Herstellung schon im trockenen Zustand, d.h. vor dem Laminieren mit Reaktionsharz, mit den Kurzfasern mit einer Länge von z.B. bis zu 1,5 mm, bzw. dem Glasmehl versetzt sein, um die Festigkeit des ausgehärteten Auskleidungsschlauchs auf das gewünschte Maß zu erhöhen.

In diesem Zusammenhang kann es hinsichtlich der Herstellungskosten von besonderem Vorteil sein, wenn der Vlieswerkstoff und das Reaktionsharz ungerichtete Kurzfasern oder Glasmehl, bzw. auch ein Gemisch aus beidem, aus vorzugsweise recyceltem und/oder zerkleinertem Glasfaserwerkstoff, enthält. Das zuvor Gesagte gilt ebenfalls für die zweite alternative Ausführungsform, wenn die Wirrfasermatte aus recycelten Glas-Kurzfasern gefertigt wird. Wie die Anmelderin gefunden hat, lässt sich durch das optionale Hinzufügen von bereits geringen Mengen an Glas-Kurzfasern, beispielsweise bis zu 20 Gew.- % bezogen auf das Gesamtgewicht des Werkstoffs der ersten Lage, eine erhebliche Steigerung des Elastizitätsmoduls in Umfangsrichtung des Auskleidungsschlauchs erhalten, und der Schrumpf des Auskleidungsschlauchs während des Aushärtens auf ein vernachlässigbares Maß reduzieren.

Um den in der zuvor beschriebenen Weise gefertigten erfindungsgemäßen Auskleidungsschlauch gegen die Einstrahlung von UV-Licht zu schützen und dadurch eine vorzeitige Aushärtung des Reaktionsharzes zu verhindern, ist bei der bevorzugten Ausführungsform der Erfindung _ wie bereits zuvor erwähnt - um die Wirrfaserlage, bzw. die Vlieslage herum ein Außenfolienschlauch aus einem umfänglich dehnbaren lichtundurchlässigen Kunststoffmaterial angeordnet, das insbesondere als Verbundfolie aus Polyethylen, Polyamid und Polyethylen, ausgeführt ist. Diese liegt so dicht wie möglich an der Außenseite der Wirrfaser-, bzw. Vlieslage an und stellt zusätzlich sicher, dass sich die einzelnen Lagen beim Einziehen des Auskleidungsschlauchs in einen zu sanierenden Kanal nicht relativ zueinander verschieben oder gar durch hervorstehende Bauwerksbestandteile beschädigt werden. Der Schutzschlauch, d.h. die äußere Lage aus flexiblem reißfestem Werkstoff, ist vorzugsweise derart ausgestaltet, dass der Außenfolienschlauch beim Einziehen desselben in einen Kanal durch eine in Längsrichtung am Schutzschlauch angreifende Kraft mit seiner Unterseite vollständig auf dem reißfesten flexiblen Werkstoff aufliegt und durch diesen gegen Beschädigungen während des Einziehvorgangs geschützt wird.

Nach einem weiteren der Erfindung zugrunde liegenden Gedanken umfasst ein Verfahren zur Herstellung eines zuvor beschriebenen Auskleidungsschlauchs die folgenden Verfahrensschritte:
- Bilden einer ersten zusammenhängenden Vlieslage, die vorzugsweise durch überlappendes schraubenförmiges Wickeln von wenigstens einem Band, vorzugsweise jedoch von zwei oder mehr Bändern aus Vlieswerkstoff, die mit einem flüssigen, Glas-Kurzfasern oder Glasmehl enthaltendem Reaktionsharz getränkt sind, um einen umfänglich geschlossenen Innenfolienschlauch geformt wird, der insbesondere aus einem für UV-Licht durchlässigen Werkstoff besteht, und
- Anordnen eines Schutzschlauchs aus einem flexiblen und in Längsrichtung des Auskleidungsschlauchs zugfesten, insbesondere reißfesten Werkstoff um zumindest einen Teil des Umfangs der Vlieslage herum
   oder alternativ
- Bilden einer ersten zusammenhängenden Vlieslage, die vorzugsweise durch überlappendes schraubenförmiges Wickeln von wenigstens einem Band, vorzugsweise jedoch von zwei oder mehr Bändern aus Vlieswerkstoff, die mit einem flüssigen Reaktionsharz getränkt sind, um einen umfänglich geschlossenen Innenfolienschlauch geformt wird, der insbesondere aus einem für UV-Licht durchlässigen Werkstoff besteht,
- Anordnen einer Lage aus ungerichteten Glasfasern auf der Vlieslage und
- Anordnen eines Schutzschlauchs aus einem flexiblen, und in Längsrichtung des Auskleidungsschlauchs zugfesten, insbesondere reißfesten Werkstoff um zumindest einen Teil des Umfangs der Lage aus ungerichteten Glasfasern herum.

Das erfindungsgemäße Verfahren besitzt den Vorteil, dass sich der Durchmesser und die Wandstärke des erfindungsgemäßen Auskleidungsschlauchs auf einfache Weise dadurch verändern lassen, dass lediglich der Durchmesser der für den Wickelvorgang eingesetzten Wickelzunge radial auf den gewünschten Normdurchmesser eingestellt wird und eine der Wandstärke des Auskleidungsschlauchs entsprechende Anzahl von Bändern aus Vlieswerkstoff mit einer vorgegebenen Dicke um den Innenfolienschlauch herum gewickelt werden. Hierbei ist es im Gegensatz zu der eingangs erwähnten Fertigung von Filzlinern nicht erforderlich, den Vlieswerkstoff entsprechend dem gewünschten Durchmesser des Auskleidungsschlauchs individuell zuzuschneiden, was den Arbeitsaufwand sowie den logistischen Aufwand erheblich reduziert.

Bei der bevorzugten Ausführungsform des erfindungsgemäßen Verfahrens wird das Band aus Vlieswerkstoff in vorteilhafter Weise vor dem Wickeln mit dem Reaktionsharz getränkt, welchem zuvor bereits schon die Glas-Kurzfasern, bzw. das Glasmehl beigemischt wurden, was auf überraschend einfache Weise z.B. durch Einstreuen der Kurzfasern oder des Glasmehls in das flüssige Reaktionsharz und Verrühren des Gemischs erfolgen kann. Das Tränken des Vlieswerkstoffs erfolgt dann dadurch, dass das Band vor dem Aufrollen zu einer Rolle durch einen Behälter gezogen wird, in dem sich das mit den Kurzfasern oder dem Glasmehl versetzte Harz befindet. Im Anschluss daran wir das überschüssiges Harz bevorzugt von der Oberfläche des Vliesbandes abgerakelt. Wie hierbei von der Anmelderin erkannt wurde, dringen die Kurzfasern, bzw. das Glasmehl in die Oberfläche des Vlieswerkstoffs ein und verzahnen sich dort mit den Vliesfasern. Nach dem Aushärten des Reaktionsharzes ergibt sich dann eine sowohl die Vliesfasern, als auch die Glas-Kurzfasern, bzw. das Glasmehl enthaltende Mischlage, die eine überraschende Festigkeit besitzt und nahezu keinerlei Schrumpf mehr zeigt.

Die Erfindung wird nachfolgend mit Bezug auf die Zeichnungen anhand von bevorzugten Ausführungsformen beschrieben.

In den Zeichnungen zeigt:
- Fig. 1: eine schematische Querschnittsansicht der ersten alternativen Ausführungsform des erfindungsgemäßen Auskleidungsschlauchs, bei dem die Vlieslage mit Glas-Kurzfasern enthaltendem Reaktionsharz getränkt ist, und
- Fig. 2: eine schematisch Querschnittsansicht der zweiten alternativen Ausführungsform der Auskleidungsschlauchs, bei der auf die Lage aus Vlieswerkstoff eine weitere Lage aus ungerichteten Glas-Kurzfasern aufgebracht ist.

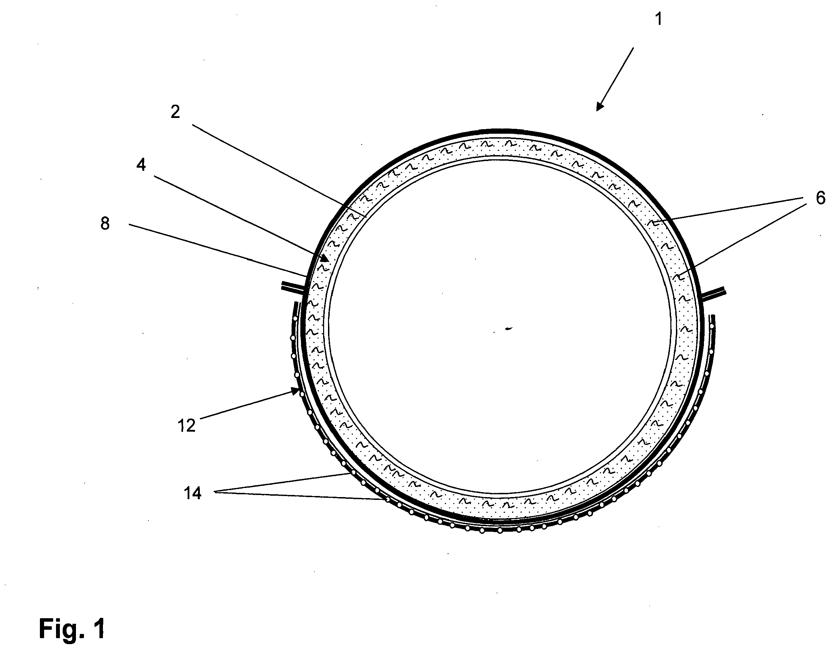

Wie in der Darstellung von Fig. 1 gezeigt ist, umfasst ein Auskleidungsschlauch 1 zur Sanierung von nicht näher gezeigten Kanälen und Abwasserleitungen einen Innenfolienschlauch 2, auf dessen Außenseite eine erste Lage aus einem Vlieswerkstoff 4, insbesondere einem Filz oder Polyestervlies, aufgebracht ist. Obgleich die erste Lage aus Vlieswerkstoff 4 auch durch ein loses überlappendes Legen von rechteckigen, zuvor mit Reaktionsharz getränkten Abschnitten aus dem Vlieswerkstoff 4 um den Umfang des Innenfolienschlauchs 2 herum geformt werden kann, besteht die erste Lage vorzugsweise aus einem schraubenförmig überlappend gewickelten Vliesband, welches bevorzugt ebenfalls vor dem Wickel mit dem Reaktionsharz getränkt wird, Zum Aufbringen der ersten Lage wird dabei eine nicht näher gezeigte Wickelvorrichtung eingesetzt, wie sie beispielsweise in der WO-A 95/04646 der Anmelderin beschrieben ist.

Bei der in Fig. 1 gezeigten, ersten alternativen Ausführungsform der Erfindung ist die erste Lage aus Vlieswerkstoff 4 mit einem flüssigen Reaktionsharz getränkt, welchem in Fig. 1 schematisch angedeutete, vergrößert dargestellte kurze Glasfasern 6 mit einer Länge von bis zu maximal 1,5 mm, vorzugsweise jedoch 0,5 bis 1 mm, beigemischt sind. Alternativ kann dem Reaktionsharz anstelle von Glasfasern 6 auch Glasmehl beigemischt sein, wobei der Anteil der Glas-Kurzfasern, bzw. des Glasmehls zwischen 5 und 15 Gew.- %, vorzugsweise 10 Gew.-% bezogen auf das Gesamtgewicht des Harzes, beträgt. Das Glasmehl kann eine mittlere Korngröße im Bereich zwischen 0,05 und 1 mm besitzen und insbesondere aus recyceltem Glas oder auch aus recyceltem und von Harzresten befreitem Glasfaserwerkstoff bestehen.

Um die erste Lage aus Vlieswerkstoff 4 herum und vorzugsweise unmittelbar an dieser anliegend ist bei dieser ersten alternativen Ausführungsform der Erfindung ein Außenfolienschlauch 8 angeordnet, der beim Einsatz von Reaktionsharzen, die durch Bestrahlen mit Licht, insbesondere UV-Licht, ausgehärtet werden, zumindest für die jeweils eingesetzte Lichtwellenlänge undurchlässig ist.

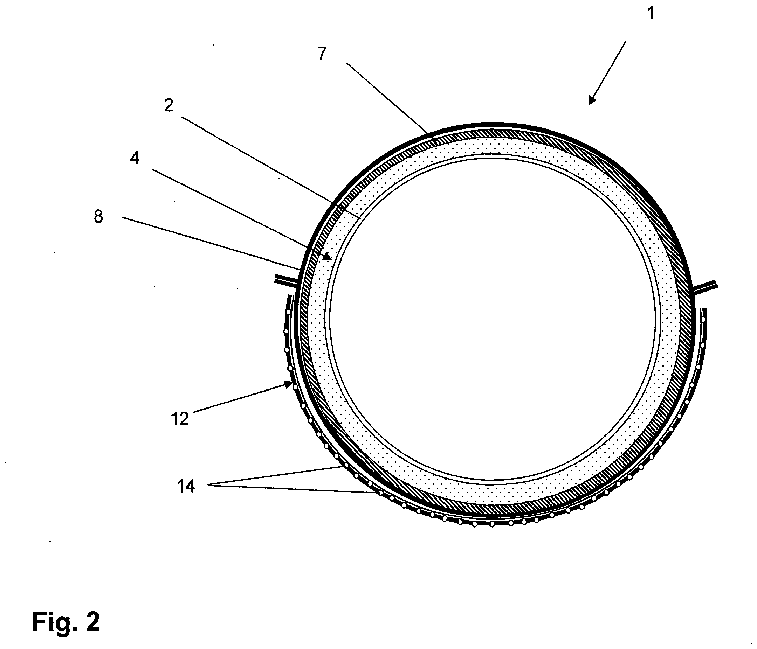

Wie weiterhin der Darstellung der Fig. 2 entnommen werden kann, ist bei einer zweiten alternativen Ausführungsform der Erfindung, bei der die erste Lage aus Vlieswerkstoff 4 mit einem herkömmlichen Reaktionsharz getränkt ist, welches keine Glas-Kurzfasern oder Glasmehl enthält, unmittelbar auf die Außenseite des vorzugsweise schraubenförmige gewickelten Vlieswerkstoffs 4 eine Lage aus Glas-Kurzfasern 7 aufgebracht, die bevorzugt in gleicher Weise wie der Vlieswerkstoff 4 mit dem flüssigen Reaktionsharz getränkt sind. Die weitere Lage aus Glas-Kurzfasern kann eine auf die Lage aus Vlieswerkstoff 4 aufgelegte Matte oder ein schraubenförmig überlappend gewickeltes Band aus gerichteten Glas-Kurzfasern, insbesondere aus in Längsrichtung oder radial verlaufenden Kurzfasern oder alternativ auch eine Wirrfasermatte oder ein schraubenförmig überlappend auf die Lage aus Vlieswerkstoff 4 aufgewickeltes Band aus Wirrfasern umfassen.

Obgleich die Möglichkeit besteht, die Wirrfasermatten auch in Längsrichtung des Auskleidungsschlauchs 1 betrachtet in überlappenden Teilabschnitten auf die Außenseite des Vlieswerkstoffs 4 aufzubringen, erstrecken sich diese bei der bevorzugten Ausführungsform vorzugsweise über die gesamte Länge des Auskleidungsschlauchs 1 hinweg. Alternativ können die Glas-Kurzfasern jedoch auch als Wirrfaserband überlappend auf die Lage aus Vlieswerkstoff 4 aufgewickelt werden, was vorzugsweise in derselben Wickelvorrichtung und im selben Arbeitsgang wie das überlappende Wickeln der Lage aus Vlieswerkstoff 4 erfolgt.

Obgleich die Wirrfasermatten, bzw. das Wirrfaserband auch trocken, d.h. ohne ein vorheriges Tränken mit Reaktionsharz auf die Lage aus Vlieswerkstoff aufgelegt werden können, werden diese zuvor mit Reaktionsharz getränkt, wodurch eine besonders gute Anbindung der Vlieslage an die darum angeordnet Lage aus Wirrfasern erhalten wird, die die Spülfestigkeit es Auskleidungsschlauchs zusätzlich verbessert.

Direkt auf die Außenseite der Lage aus ungerichteten Kurzfasern 7 ist bei dieser in Fig. 2 gezeigten alternativen Ausführungsform der für UV-Licht undurchlässige Außenfolienschlauch 8 aufgebracht, der, wie auch bei der in Fig. 1 gezeigten Ausführungsform, aus zwei in den seitlichen Bereichen überlappend thermisch miteinander verschweißten oder auch verklebten einzelnen Teilabschnitten besteht.

Wie der Darstellung der Fig. 1 und 2 weiterhin entnommen werden kann, ist um den für UV-Licht undurchlässigen Außenfolienschlauch 8 herum ein Schutzschlauch 12 aus einem reißfesten flexiblen Werkstoff angeordnet, der vorzugsweise ein beschichtetes Polyestergewebe ist, dass in Längsrichtung des Auskleidungsschlauchs 1 verlaufende Gewebefäden 14 aufweist.

Bei der bevorzugten Ausführungsform der Erfindung ist der Schutzschlauch 12 lediglich teilweise im unteren Bereich vorzugsweise im Bereich zwischen 14Uhr und 10 Uhr, um die Außenseite des Außenfolienschlauchs 8 herum angeordnet, wie dies in Fig. 1 und 2 angedeutet ist. Die Befestigung des Schutzschlauchs 12 am Außenfolienschlauch 8 kann beispielsweise durch ein in den Zeichnungen nicht näher gezeigtes Klebeband erfolgen, welches entlang der Längsränder des Schutzschlauchs 12 auf den Außenfolienschlauch 8 aufgeklebt wird. Alternativ besteht die Möglichkeit, den Schutzschlauch 12 beispielsweise durch Klebstoff, beispielsweise Heißklebstoff, am Außenfolienschlauch zu befestigen, der hierzu z.B. während des Verschweißens des Außenfolienschlauchs als laufende Raupe auf die Außenseite des Außenfolienschlauchs 8 oder die Innenseite des Schutzschlauchs 12 aufgebracht wird, bevor der Schutzschlauch 12 und der Außenfolienschlauch 8 übereinander geführt werden.

Alternativ besteht die Möglichkeit, den Schutzschlauch 12 vollständig um den Außenfolienschlauch 8 herum zu führen und diesen mit einem sich über die Länge des Schutzschlauchs 12 hinweg erstreckenden umfänglich dehnbaren Abschnitt zu versehen, der beim Einziehen des erfindungsgemäßen Auskleidungsschlauchs 1 in einen zu sanierenden Kanal umfänglich verkürzt ist und erst beim Expandieren des Auskleidungsschlauchs 1 mit Hilfe von Druckluft umfänglich aufgeweitet wird, um eine radiale Aufweitung der ersten, der Vlieslage 4 und dem Außenfolienschlauch 8 zu ermöglichen, so dass sich die Außenseite des Auskleidungsschlauchs 1 beim Aushärten an die Kanalinnenwand anlegen kann.

Bei den zuvor beschriebenen Ausführungsformen der Erfindung beträgt die Dicke der ersten Lage aus Vlieswerkstoff 4 vorzugsweise mehr als 50% der gesamten Wandstärke des Auskleidungsschlauchs im nicht ausgehärteten Zustand, d.h. vor dem Einziehen desselben in einen zu sanierenden Kanal.

### Bezugszeichenliste

- 1: Auskleidungsschlauch
- 2: Innenfolienschlauch
- 4: Vlieswerkstoff
- 6: kurze Glasfasern in Vlieswerkstoffs
- 7: Lage aus ungerichteten Glas-Kurzfasern
- 8: Außenfolienschlauch
- 12: Schutzschlauch
- 14: Gewebe in flexiblem folienartigen Werkstoff des Schutzschlauchs

## Patentansprüche

1. Auskleidungsschlauch (1) zur Sanierung von Kanälen und Abwasserleitungen, mit einem Innenfolienschlauch (2), auf welchem wenigstens eine Lage aus Vlieswerkstoff (4) angeordnet ist, welches mit einem durch Licht oder Wärme härtbaren flüssigen Reaktionsharz getränkt ist, wobei
auf dem Vlieswerkstoff (4) wenigstens eine weitere Lage aus Glas-Kurzfasern (6) angeordnet ist, und der Vlieswerkstoff (4) zumindest teilweise von einem Schutzschlauch (12) aus einem flexiblen, in Längsrichtung des Auskleidungsschlauchs zugfesten, insbesondere reißfesten Werkstoff, umgeben ist, über welchen der Auskleidungsschlauch in einen zu sanierenden Kanal einziehbar ist,
**dadurch gekennzeichnet,**
**dass** das Reaktionsharz Glas-Kurzfasern (6) und/oder Glasmehl enthält.

2. Auskleidungsschlauch nach Anspruch 1,
**dadurch gekennzeichnet,**
**dass** die erste Lage wenigstens ein schraubenförmig überlappend gewickeltes Band aus Vlieswerkstoff (4) enthält, und dass das wenigstens eine Band aus Vlieswerkstoff (4) eine Dicke zwischen 0,5 mm und 2 mm, vorzugsweise 1 mm und eine Breite zwischen 200 und 700 mm besitzt, und/oder dass die erste Lage aus Vlieswerkstoff (4) wenigstens zwei separate übereinander liegende Bänder aus Vlieswerkstoff enthält.

3. Auskleidungsschlauch nach Anspruch 1,
**dadurch gekennzeichnet,**
**dass** die erste Lage aus Vlieswerkstoff (4) eine Dicke im Bereich zwischen 3 mm und 8 mm, insbesondere zwischen 4 mm und 6 mm besitzt, und/oder dass der Auskleidungsschlauch einen Durchmesser im Bereich von 150 mm bis 500 mm aufweist.

4. Auskleidungsschlauch nach einem der vorhergehenden Ansprüche,
**dadurch gekennzeichnet,**
**dass** die Dicke der ersten Lage aus Vlieswerkstoff (4) mehr als 50% der Wandstärke des Auskleidungsschlauchs beträgt.

5. Auskleidungsschlauch nach einem der vorhergehenden Ansprüche,
**dadurch gekennzeichnet,**
**dass** die weitere Lage aus Glas-Kurzfasern eine auf die Lage aus Vlieswerkstoff (4) aufgelegte Matte oder ein schraubenförmige gewickeltes Band aus gerichteten Glas-Kurzfasern, insbesondere in Längsrichtung oder radial verlaufenden Kurzfasern, oder eine Wirrfasermatte, oder ein schraubenförmig überlappend auf die Lage aus Vlieswerkstoff (4) aufgewickeltes Band aus Wirrfasern umfasst

6. Auskleidungsschlauch nach Anspruch 5,
**dadurch gekennzeichnet,**
**dass** die weitere Lage aus Glas-Kurzfasern eine ungetränkte Matte oder ein Band aus gerichteten oder ungerichteten Glas-Kurzfasern umfasst.

7. Auskleidungsschlauch nach einem der vorhergehenden Ansprüche,
**dadurch gekennzeichnet,**
**dass** der Anteil der Glas-Kurzfasern im Reaktionsharz zwischen 5 Gew.- % und 20 Gew.- %, vorzugsweise 10 Gew.-% bezogen auf das Gesamtgewicht des Harzes und der darin enthaltenen Glas-Kurzfasern beträgt, oder dass der Anteil des Glasmehls im Reaktionsharz zwischen 5 Gew.-% und 20 Gew.-%, vorzugsweise 10 Gew.-% bezogen auf das Gesamtgewicht des Harzes und dem darin enthaltenen Glasmehl beträgt,

8. Auskleidungsschlauch nach einem der vorhergehenden Ansprüche,
**dadurch gekennzeichnet,**
**dass** das Glasmehl eine mittlere Korngröße im Bereich zwischen 0,05 und 1 mm besitzt.

9. Auskleidungsschlauch nach einem der vorhergehenden Ansprüche,
**dadurch gekennzeichnet,**
**dass** der Vlieswerkstoff ein Kunststoffvlies, insbesondere ein Polyestervlies und/oder ein Polyethylenvlies und/oder ein Polyacrylnitrilvlies ist oder ein solches enthält.

10. Auskleidungsschlauch nach einem der vorhergehenden Ansprüche,
**dadurch gekennzeichnet,**
**dass** das Reaktionsharz ein Fotoinitiatoren enthaltendes, durch UV-Licht härtbares Reaktionsharz ist, und dass um die Lage aus Vlieswerkstoff (4) oder um die weitere Lage aus ungerichteten Glas-Kurzfasem (6) herum ein Außenfolienschlauch (10) aus einem umfänglich dehnbaren, vorzugsweise lichtundurchlässigem Kunststoffrnaterial, insbesondere eine Verbundfolie aus Polyethylen, Polyamid und Polyethylen, angeordnet ist.

11. Verfahren zur Herstellung eines Auskleidungsschlauchs nach einem der vorhergehenden Ansprüche mit den folgenden Verfahrensschritten:
Tränken eines Bandes aus Vlieswerkstoff mit einem Glas-Kurzfasern oder Glasmehl enhaltendem flüssigen Reaktionsharz und Bilden einer ersten zusammenhängenden Vlieslage um einen umfänglich geschlossenen, insbesondere für UV-Licht durchlässigen Innenfolienschlauch, und Anordnen eines Schutzschlauchs (12) aus einem flexiblen, in Längsrichtung des Auskleidungsschlauchs zugfesten, insbesondere reißfesten Werkstoff um wenigstens einen Teil der Außenseite der Lage aus Vlieswerkstoff (4).

12. Verfahren nach Anspruch 11,
**dadurch gekennzeichnet,**
**dass** die Glas-Kurzfasern vor dem Einbringen des Harzes in die Lage aus Vlieswerkstoff (4) in das flüssige Reaktionsharz eingestreut und durch Rühren mit diesem vermischt werden.

13. Verfahren nach Anspruch 11 oder 12,
**dadurch gekennzeichnet.**
**dass** die erste Lage aus Vlieswerkstoff durch überlappendes schraubenförmiges Wickeln eines Bandes aus Vlieswerkstoff (4) erzeugt wird.

## Claims

1. Lining sleeve (1) for the rehabilitation of sewers and wastewater lines, having an inner film sleeve (2) on which at least one ply composed of nonwoven material (4) is arranged, which material is impregnated with a light-curable or heat-curable liquid reactive resin, wherein
at least one further ply composed of glass short fibres (6) is arranged on the nonwoven material (4), and the nonwoven material (4) is at least partially surrounded by a protective sleeve (12) composed of a flexible material which is tension-resistant, in particular tear-resistant, in the longitudinal direction of the lining sleeve, by way of which protective sleeve the lining sleeve can be pulled into a sewer to be rehabilitated, **characterized**
**in that** the reactive resin contains glass short fibres (6) and/or finely ground glass.

2. Lining sleeve according to Claim 1,
**characterized**
**in that** the first ply contains at least one band which is wound in a helically overlapping manner and which is composed of nonwoven material (4), and in that the at least one band composed of nonwoven material (4) has a thickness of between 0.5 mm and 2 mm, preferably 1 mm, and a width of between 200 and 700 mm, and/or in that the first ply composed of nonwoven material (4) contains at least two separate bands composed of nonwoven material which lie above one another.

3. Lining sleeve according to Claim 1,
**characterized**
**in that** the first ply composed of nonwoven material (4) has a thickness in the range between 3 mm and 8 mm, in particular between 4 mm and 6 mm, and/or in that the lining sleeve has a diameter in the range from 150 mm to 500 mm.

4. Lining sleeve according to one of the preceding claims,
**characterized**
**in that** the thickness of the first ply composed of nonwoven material (4) is more than 50% of the wall thickness of the lining sleeve.

5. Lining sleeve according to one of the preceding claims,
**characterized**
**in that** the further ply composed of glass short fibres comprises a mat which is laid onto the ply composed of nonwoven material (4), or a helical wound band composed of oriented glass short fibres, in particular short fibres which run in the longitudinal direction or radially, or a random-fibre mat, or a band composed of random fibres which is wound onto the ply composed of nonwoven material (4) in a helically overlapping manner.

6. Lining sleeve according to Claim 5,
**characterized**
**in that** the further ply composed of glass short fibres comprises a non-impregnated mat or a band composed of oriented or non-oriented glass short fibres.

7. Lining sleeve according to one of the preceding claims,
**characterized**
**in that** the proportion of glass short fibres in the reactive resin is between 5% by weight and 20% by weight, preferably 10% by weight, based on the total weight of the resin and of the glass short fibres contained therein, or in that the proportion of finely ground glass in the reactive resin is between 5% by weight and 20% by weight, preferably 10% by weight, based on the total weight of the resin and of the finely ground glass contained therein.

8. Lining sleeve according to one of the preceding claims,
**characterized**
**in that** the finely ground glass has a mean grain size in the range between 0.05 and 1 mm.

9. Lining sleeve according to one of the preceding claims,
**characterized**
**in that** the nonwoven material is, or contains, a plastic nonwoven, in particular a polyester nonwoven and/or a polyethylene nonwoven and/or a polyacrylonitrile nonwoven.

10. Lining sleeve according to one of the preceding claims,
**characterized**
**in that** the reactive resin is a UV light-curable reactive resin containing photoinitiators, and in that an outer film sleeve (10) composed of a circumferentially elastic, preferably light-impermeable plastics material, in particular a composite film composed of polyethylene, polyamide and polyethylene, is arranged around the ply composed of nonwoven material (4) or around the further ply composed of non-oriented glass short fibres (6).

11. Method for producing a lining sleeve according to one of the preceding claims, having the following method steps:
impregnating a band composed of nonwoven material with a liquid reactive resin containing glass short fibres or finely ground glass and forming a first contiguous nonwoven ply around a circumferentially closed, in particular UV light-permeable inner film sleeve, and arranging a protective sleeve (12) composed of a flexible material which is tension-resistant, in particular tear-resistant, in the longitudinal direction of the lining sleeve around at least part of the outer side of the ply composed of nonwoven material (4).

12. Method according to Claim 11,
**characterized**
**in that**, prior to the introduction of the resin into the ply composed of nonwoven material (4), the glass short fibres are strewn into the liquid reactive resin and mixed therewith by stirring.

13. Method according to Claim 11 or 12,
**characterized**
**in that** the first ply composed of nonwoven material is generated as a result of overlapping helical winding of a band composed of nonwoven material (4).

## Revendications

1. Tuyau de revêtement (1) pour l'assainissement de canalisations et de conduites d'eaux usées, comprenant un tuyau de film intérieur (2) sur lequel est disposée au moins une couche de matériau non-tissé (4) qui est imprégnée d'une résine réactionnelle fluide durcissable à la lumière ou à la chaleur,
au moins une couche supplémentaire en fibres de verre courtes (6) étant disposée sur le matériau non-tissé (4), et le matériau non-tissé (4) étant entouré au moins en partie par un tuyau de protection (12) constitué d'un matériau flexible résistant à la traction, en particulier résistant à la rupture, dans la direction longitudinale du tuyau de revêtement, par le biais duquel le tuyau de revêtement peut être tiré dans une canalisation à assainir,
**caractérisé en ce que**
la résine réactionnelle contient des fibres de verre courtes (6) et/ou de la poudre de verre.

2. Tuyau de revêtement selon la revendication 1,
**caractérisé en ce que**
la première couche contient au moins une bande de matériau non-tissé (4) enroulée de manière hélicoïdale avec chevauchement, et **en ce que** l'au moins une bande de matériau non-tissé (4) possède une épaisseur comprise entre 0,5 mm et 2 mm, de préférence de 1 mm et une largeur comprise entre 200 et 700 mm, et/ou **en ce que** la première couche en matériau non-tissé (4) contient au moins deux bandes de matériau non-tissé séparées placées l'une sur l'autre.

3. Tuyau de revêtement selon la revendication 1,
**caractérisé en ce que**
la première couche en matériau non-tissé (4) possède une épaisseur dans une plage comprise entre 3 mm et 8 mm, en particulier entre 4 mm et 6 mm, et/ou **en ce que** le tuyau de revêtement présente un diamètre dans une plage comprise entre 150 mm et 500 mm.

4. Tuyau de revêtement selon l'une quelconque des revendications précédentes,
**caractérisé en ce que**
l'épaisseur de la première couche de matériau non-tissé (4) représente plus de 50 % de l'épaisseur de paroi du tuyau de revêtement.

5. Tuyau de revêtement selon l'une quelconque des revendications précédentes,
**caractérisé en ce que** la couche supplémentaire en fibres de verre courtes comprend un tapis posé sur la couche de matériau non-tissé (4) ou une bande enroulée de manière hélicoïdale constituée de fibres de verre courtes orientées, en particulier de fibres courtes s'étendant dans la direction longitudinale ou radialement, ou un tapis de fibres emmêlées, ou une bande de fibres emmêlées enroulée de manière hélicoïdale avec chevauchement sur la couche de matériau non-tissé (4).

6. Tuyau de revêtement selon la revendication 5,
**caractérisé en ce que**
la couche supplémentaire de fibres de verre courtes comprend un tapis non imprégné ou une bande de fibres de verre courtes orientées ou non orientées.

7. Tuyau de revêtement selon l'une quelconque des revendications précédentes,
**caractérisé en ce que**
la proportion des fibres de verre courtes dans la résine réactionnelle constitue entre 5 % en poids et 20 % en poids, de préférence 10 % en poids, par rapport au poids total de la résine et des fibres de verre courtes contenues dans celle-ci, ou **en ce que** la proportion de la poudre de verre dans la résine réactionnelle constitue entre 5 % en poids et 20 % en poids, de préférence 10 % en poids par rapport au poids total de la résine et de la poudre de verre contenue dans celle-ci.

8. Tuyau de revêtement selon l'une quelconque des revendications précédentes,
**caractérisé en ce que**
la poudre de verre possède une granulométrie moyenne dans une plage comprise entre 0,05 et 1 mm.

9. Tuyau de revêtement selon l'une quelconque des revendications précédentes,
**caractérisé en ce que**
le matériau non-tissé est un non-tissé synthétique, en particulier un non-tissé en polyester et/ou un non-tissé en polyéthylène et/ou un non-tissé en polyacrylonitrile ou contient un tel non-tissé.

10. Tuyau de revêtement selon l'une quelconque des revendications précédentes,
**caractérisé en ce que**
la résine réactionnelle est une résine réactionnelle contenant des photoinitiateurs, durcissable à la lumière ultraviolette, et **en ce qu'**un tuyau en film extérieur (10) constitué d'un matériau synthétique étirable sur la périphérie, de préférence opaque à la lumière, en particulier un film composite constitué de polyéthylène, de polyamide et de polyéthylène, est disposé autour de la couche de matériau non-tissé (4) ou autour de la couche supplémentaire constituée de fibres de verre courtes non orientées (6).

11. Procédé pour fabriquer un tuyau de revêtement selon l'une quelconque des revendications précédentes, comprenant les étapes de procédé suivantes :
imprégnation d'une bande de matériau non-tissé avec une résine réactionnelle fluide contenant des fibres de verre courtes ou de la poudre de verre et formation d'une première couche de non-tissé cohésive autour d'un tuyau en film intérieur fermé sur sa périphérie, en particulier perméable à la lumière ultraviolette, et disposition d'un tuyau de protection (12) constitué d'un matériau flexible résistant à la traction, en particulier résistant à la rupture, dans la direction longitudinale du tuyau de revêtement autour d'au moins une partie du côté extérieur de la couche en matériau non-tissé (4).

12. Procédé selon la revendication 11,
**caractérisé en ce que**
les fibres de verre courtes, avant l'introduction de la résine dans la couche de matériau non-tissé (4), sont dispersées dans la résine réactionnelle fluide et sont mélangées avec celle-ci par agitation.

13. Procédé selon la revendication 11 ou 12,
**caractérisé en ce que**
la première couche constituée de matériau non-tissé est produite par enroulement hélicoïdal avec chevauchement d'une bande de matériau non-tissé (4) .
